# EUROPEAN PATENT APPLICATION

(11) **EP 4 609 921 A1**
(43) Date of publication of application: **03.09.2025**
(21) Application number: 24875637.1
(22) Date of filing: 12.01.2024
(51) Int. Cl.: A62D 1/06, A62D 1/00

(54) **FIRE SUPPRESSANT FOR SECONDARY BATTERY, FIRE-SUPPRESSING MEMBER FOR SECONDARY BATTERY, AND SECONDARY BATTERY**

(71) Applicant: TL Co., Ltd., Goyang-si, Gyeonggi-do 10355 (KR)
(72) Inventor: LEE, Sang Cheol, Hwaseong-si, Gyeonggi-do 18496 (KR); CHOI, Jong Suk, Goyang-si, Gyeonggi-do 10322 (KR)
(74) Representative: RGTH
(86) International application number: PCT/KR2024/000590
(87) International publication number: WO 2025/150591

(57) **Abstract**

An embodiment of the present invention provides a fire suppressant, a suppression member, and a secondary battery including the same, the fire suppressant comprising: at least one first material having a decomposition initiation temperature; and a second material mixed with the first material to bind the first material, wherein the first material is decomposed when the decomposition initiation temperature is reached to render a combustible organic compound non-combustible.

## Description

### [Technical Field]

The present invention relates to a secondary battery fire suppressant, a secondary battery fire suppression member, and a secondary battery, and more particularly, to a secondary battery fire suppressant, a secondary battery fire suppression member, and a secondary battery capable of effectively suppressing a fire of a secondary battery.

### [Background Art]

A secondary battery having a high degree of integration of electrical energy may be vulnerable to impact.

Secondary batteries cause thermal runaway within a short period of time while momentarily emitting high energy accumulated by internal defects or external shocks, resulting in fires, making it very difficult to cope with accidents.

If a secondary battery fire breaks out, to try to extinguish the fire is a common way.

Lithium in the secondary battery liquefies at a melting point of 108.5°C and vaporizes rapidly at 500°C or higher. A white gas is generated during the thermal runaway of the secondary battery, and the main component of this white gas is vaporized lithium. As lithium vaporizes, the pressure inside the battery cell rises, completely gasifying at 1337°C. When the battery cell bursts not withstanding this increase in pressure, lithium gas rapidly reacts with oxygen to generate flames and heat, and thermal runaway occurs.

Therefore, as a method of coping with a fire of a secondary battery, it is not appropriate to rely on extinguishing the fire after its occurrence as in the related art. That is, there is a need for a new technology capable of preventing thermal runaway of the secondary battery in advance or rapidly suppressing a fire even if thermal runaway occurs.

### [Document of Related Art]

### [Patent Document]

Patent Document 0001: Korean Patent Publication No. 10-2022-0125085

### [Summary of Invention]

### [Technical Problem]

An object of the present invention is to provide a fire suppressant capable of effectively suppressing a fire of a secondary battery and a suppression member including the same in order to solve the technical problem to be achieved by the present invention.

The technical problems to be achieved by the present invention are not limited to the technical problems mentioned above, and other technical problems not mentioned may be clearly understood by those skilled in the art to which the present disclosure pertains from the following description.

### [Solution to Problem]

According to an embodiment of the present invention, the fire suppressant comprises: at least one first material having a decomposition initiation temperature; and a second material mixed with the first material to bind the first material, wherein the first material is decomposed when the decomposition initiation temperature is reached, thereby rendering a combustible organic compound non-combustible.

The first material may be a fire extinguishing material, and the second material may be an organic binder.

The fire extinguishing material may include two or more fire extinguishing materials, the two or more fire extinguishing materials may have two or more decomposition initiation temperatures, and may be decomposed in stages to render the combustible organic compound non-combustible.

The first material may include one or more of carbonate, chloride, hydroxide, and phosphate.

The carbonate may include at least one of sodium carbonate (Na2CO3), sodium bicarbonate (NaHCO3), potassium carbonate (K2CO3), potassium bicarbonate (KHCO3), ammonium carbonate ((NH4)2CO3), and ammonium bicarbonate (NH4HCO3).

The chloride may include at least one of ammonium chloride (NH4Cl), potassium chloride (KCl), aluminum chloride (AlCl3), and sodium chloride (NaCl).

The hydroxide may include at least one of sodium hydroxide (NaOH), potassium hydroxide (KOH), calcium hydroxide (Ca(OH)2), and magnesium hydroxide (Mg(OH)2).

The phosphate may include at least one of ammonium phosphate ((NH4)3PO4), sodium phosphate (Na3PO4), and potassium phosphate (K3PO4).

The fire suppressant may be provided in one or more phases of a paste phase, a liquid phase, and a gas phase.

The second material may include at least one of an organic adhesive and an elastomer.

According to another embodiment of the present invention, there is provided a fire suppression member including: a pair of fiber members; and a fire suppressant provided between the pair of fiber members, the fire suppressant including at least one fire extinguishing material which has a decomposition initiation temperature and is decomposed when the decomposition initiation temperature is reached to render a combustible organic compound non-combustible; and an organic binder mixed with the fire extinguishing material, thereby rendering the combustible organic compound non-combustible.

A secondary battery according to another embodiment of the present invention may include: one or more fire extinguishing materials having a decomposition initiation temperature; and an organic binder mixed with the fire extinguishing materials, wherein the fire extinguishing materials may include a fire suppressant that decomposes when reaching the decomposition initiation temperature to render a combustible organic compound non-combustible.

### [Advantageous Effects of Invention]

According to an embodiment of the present invention, there may be provided a fire suppressant, a fire suppression member, and a secondary battery including the same, which are capable of effectively suppressing a fire of the secondary battery.

### [Brief Description of Drawings]

FIG. 1 is a conceptual diagram of a secondary battery fire suppressant according to an embodiment of the present invention.
FIG. 2 is a graph showing a Fourier transform infrared spectroscopy analysis (FRIT) for carbon monoxide and acetylene gas generated during thermal runaway of a secondary battery cell according to an embodiment of the present invention.
FIG. 3 is a photograph showing a paste phase of a secondary battery fire suppressant according to an embodiment of the present invention.
FIG. 4 is a photograph showing a secondary battery fire suppression member according to an embodiment of the present invention.
FIG. 5 is an exemplary diagram for explaining a use example of a secondary battery fire suppression member according to an embodiment of the present invention.

### [Description of Embodiments]

Hereinafter, the present invention will be described with reference to the accompanying drawings.

However, the present disclosure may be implemented in various different forms, and thus is not limited to the embodiments described herein. In addition, in order to clearly describe the present invention in the drawings, parts irrelevant to the description are omitted, and similar reference numerals are applied to similar parts throughout the specification.

In describing the present invention, when it is determined that the detailed description of the known technology related to the present invention may unnecessarily obscure the essence of the present invention, the detailed description thereof will be omitted. In addition, the terms to be described below are terms defined in consideration of functions in the present invention, and may vary depending on the intention or practice of a user or an operator. Therefore, the definition should be made based on the contents throughout this specification.

The technical idea of the present invention is determined by the claims, and the following embodiments are merely means for efficiently explaining the technical idea of the present invention to those skilled in the art to which the present invention belongs.

The terms used in the present specification are used only to describe specific embodiments, and are not intended to limit the present invention. Singular expressions include plural expressions unless the context clearly indicates otherwise. In the present specification, it should be understood that terms such as "include" or "have" are intended to designate the presence of features, numbers, steps, operations, components, parts described in the specification, or combinations thereof, and do not preclude the presence or addition of one or more other features, numbers, steps, operations, components, parts, or combinations thereof.

Hereinafter, embodiments of the present invention will be described in detail with reference to the accompanying drawings.

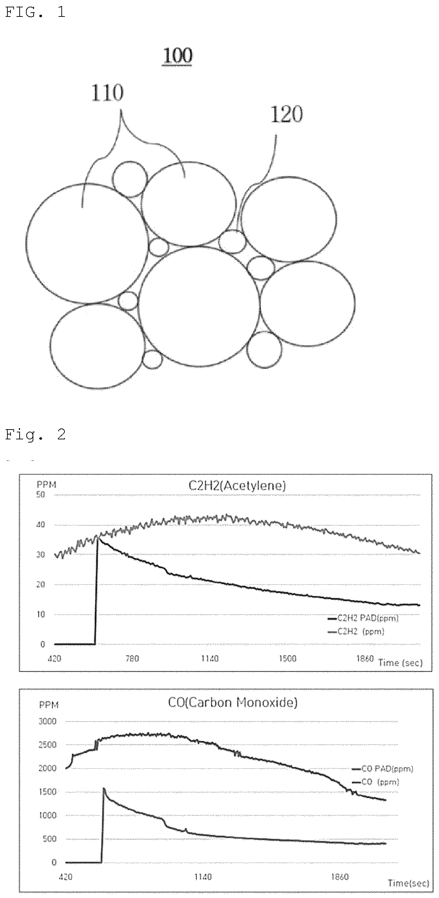

FIG. 1 is a schematic diagram of a secondary battery fire suppressant according to an embodiment of the present invention.

As shown in FIG. 1, the secondary battery fire suppressant 100 is intended to suppress fire in the secondary battery, and may include a first material and a second material. The first material is a fire-extinguishing material having a decomposition initiation temperature. In the following description of embodiments of the present invention, the first material may be referred to as a fire-extinguishing agent, fire-extinguishing material, or fire-extinguishing powder. The second material is a material that is mixed with the first material and binds the first material, and may be referred to as an organic binder 120 in the following description of embodiments of the present invention.

The secondary battery fire suppressant 100 according to an embodiment of the present invention may include a fire extinguishing material 110 and an organic binder 120. The fire extinguishing material 110 refers to a composition having a fire extinguishing property capable of functioning in a liquid state, a vapor phase, a solid phase, a powder state, or the like, and hereinafter, it is described as the fire extinguishing material 110 to the fire extinguishing powder 110, but this is for explaining a representative embodiment and is not limited to a specific state or phase.

The fire extinguishing material 110 may block contact with oxygen to cause a suffocating effect against fire, and may be a combination of a carbonated ion having reactivity with lithium and a monovalent or divalent cation.

The fire extinguishing material 110 may be an inorganic salt, for example, an inorganic salt powder. In addition, the inorganic salt formulation may include an alkali metal, an alkaline earth metal, and an ammonium-based material on the periodic table having a strong oxygen radical absorption.

The alkali metal series may include at least one of sodium carbonate (Na2CO3), sodium bicarbonate (NaHCO3), potassium carbonate (K2CO3), and potassium bicarbonate (KHCO3).

The alkaline earth metals may include at least one of magnesium bicarbonate (Mg(HCO3)2), magnesium carbonate (MgCO3), calcium carbonate (CaCO3), and calcium bicarbonate (Ca(HCO3)2).

In addition, the ammonium-based material may include at least one of ammonium carbonate ((NH4)2CO3) and ammonium bicarbonate (NH4HCO3).

The fire extinguishing material 110 may specifically be inorganic carbonate.

When the carbonate is decomposed by heat, reactive decomposition gas and cationic metal ions may be automatically ejected.

When damage occurs to the secondary battery due to internal and external causes such as damage to the separator, application of external pressure, etc., resistance increases due to a short circuit between the positive electrode and the negative electrode due to damage to the separator. In parallel with the resistance heat generated thereby, pyrolysis of the electrolyte material and a rapid exothermic reaction causing flammable and toxic gases are accompanied, and the temperature and internal pressure of the secondary battery are rapidly increased as shown in Table 1 below.

**Table 1**

| | | | | | | |
|---|---|---|---|---|---|---|
| Pressure (Air Pressure) | 0.00001 | 0.0001 | 0.001 | 0.01 | 0.1 | 1 |
| Temperature (°C) | 524 | 612 | 722 | 871 | 1064 | 1337 |

Here, when the carbonate contained in the secondary battery fire suppressant according to an embodiment of the present invention, for example, the carbonate contained in the lithium battery, encounters such heat, it may react as shown in the following reaction formula and decompose.

This phenomenon may be influenced by organic material inside the battery cell, but the most important factor is that lithium ions obtain electrons and become lithium metal and vaporize themselves as shown in [Chemical Formula 1] and [Chemical Formula 2] below, or combine with nitrogen in the air to form lithium nitride.

[Chemical formula 1] Li+ + e- → Li

[Chemical formula 2] 6Li + N2 → 2Li3N

In addition, as shown in [Chemical Formula 3] to [Chemical Formula 5] below, lithium or lithium nitride rapidly reacts with water vapor or oxygen thereby generating significant heat and combusting to produce lithium peroxide or lithium oxide.

[Chemical formula 3] 4Li + O2 → 2Li2O

[Chemical formula 4] 4Li + 2H2O + O2 → 4LiOH

[Chemical formula 5] 2Li + H2O → Li2O + H2

Meanwhile, in such a high-temperature environment, the carbonate according to an embodiment of the present invention may be decomposed to generate a reactive decomposition gas and a cationic metal ion.

The generated reactive decomposition gas may render the combustible gas (lithium gas) ejected from the secondary battery non-combustible. The reactive decomposition gas emitted through thermal decomposition of the carbonate may be carbon dioxide (CO₂)

In addition, the cationic metal ions absorb radicals generated from electrical sparks or flames to block chain combustion reactions.

As shown in Chemical Formula 6 and Chemical Formula 7 below, when a fire occurs in the secondary battery, the carbonate may be decomposed by the generated heat and carbon dioxide may be released. Then, the vaporized lithium may be non-combustible by reacting with carbon dioxide and oxygen to be converted into carbonate.

As described above, when the carbonate is decomposed to release carbon dioxide and access of oxygen is blocked due to the suffocating effect by the carbon dioxide, combustion due to a fire in the secondary battery may be effectively suppressed or effectively extinguished.

[Chemical Formula 6] 4Li + 2CO2 + O2 → 2Li2CO3

[Chemical formula 7] 2Li + 2CO2 + H2O + 1/2O2→ 2LiHCO3

Meanwhile, in a situation where the temperature and internal pressure of the secondary battery rapidly increase due to various causes, radical ions are generated by sparks generated inside the secondary battery, thereby inducing ignition of the secondary battery.

When the carbonate contained in the fire extinguishing material 110 according to an embodiment of the present invention is decomposed by heat, cationic metal ions (e.g., an alkali metal or an alkaline earth metal) may be generated.

Here, the radical ion may be absorbed by the cationic metal ion. Through this, the generation of sparks in the secondary battery may be suppressed, and the ignition of the secondary battery may be blocked. That is, according to such a side catalyst effect, a chain combustion reaction of the secondary battery may be suppressed. Therefore, it is possible to prevent a fire of the secondary battery including the secondary battery fire suppressant according to an embodiment of the present invention, and to suppress the spread of the generated fire.

Here, the carbonate that may be included in the fire extinguishing material 110 according to an embodiment of the present invention may be at least one of sodium carbonate (Na2CO3), sodium bicarbonate (NaHCO3), potassium carbonate (K2CO3), potassium bicarbonate (KHCO3), magnesium hydrogen carbonate (Mg(HCO3)2), magnesium carbonate (MgCO3), calcium carbonate (CaCO3), calcium bicarbonate (Ca(HCO3)2), ammonium carbonate ((NH4)2CO3), and ammonium bicarbonate (NH4HCO3). Here, one carbonate may be included according to the decomposition initiation temperature of each carbonate as shown in Table 2 below, or two or more carbonates may be mixed and included.

**Table 2**

| Category | Chemical formula | Molecular weight | Decomposition initiation temperature (°C) |
|---|---|---|---|
| Ammonium bicarbonate | NH₄HCO₃ | 79.06 | 41-45 |
| Ammonium carbonate | (NH₄)₂CO₃ | 96.09 | 60 |
| Sodium bicarbonate | NaHCO₃ | 84 | 80 |
| Sodium carbonate | Na₂CO₃ | 105.99 | 100 |
| Potassium bicarbonate | KHCO₃ | 100.1 | 100-200 |
| Potassium carbonate | K₂CO₃ | 138.2 | 850 |
| Magnesium carbonate | MgCO₃ | 84.3 | 350 (anhydride) |
| | | | 165 (trihydrate) |

Here, the decomposition initiation temperature may be a temperature at which decomposition of carbonate starts. As described in Table 2, each carbonate may have a unique decomposition initiation temperature. The carbonate may be selected based on user requirements, such as the temperature at which the carbonate is required to decompose to have fire suppression functionality, reactivity with organic substances that may be included in the secondary battery, or the need for weight adjustment according to differences in molecular weight. The selected carbonate may be included in the secondary battery fire suppressant.

In addition, as shown in Table 3 below, two or more carbonates may be mixed and included in the secondary battery fire suppressant. This combination is designed to achieve sequential fire suppression, and thus may provide enhanced assurance of fire suppression effectiveness. Here, since the carbonate starts to decompose at the decomposition initiation temperature at which the carbonate described in Table 2 is decomposed to achieve the fire suppression function, the secondary battery fire suppressant according to an embodiment of the present invention may include 50% or more of the carbonate having the decomposition initiation temperature closest to the temperature at which the risk of fire arises. Additionally, a carbonate having a decomposition initiation temperature equal to or lower than the risk temperature and closest to the temperature at which fire is likely to occur may also be included in an amount of 50% or more.

**Table 3**

| Decomposition initiation temperature | 60 °C | 100 °C | 150 °C |
|---|---|---|---|
| Ammonium carbonate | 55 wt % | 10 wt % | |
| Potassium bicarbonate | 20 wt % | 60 wt % | 10 wt % |
| Magnesium carbonate | 5 wt % | 10 wt % | 70 wt % |

Here, the decomposition initiation temperature at which the decomposition of the carbonate is initiated for the inhibition of the fire may be selected. Such selection may be made according to a setting of a producer of a lithium ion secondary battery or a producer of a product on which a lithium ion secondary battery is mounted. The temperature considered to be a risk temperature may vary depending on the production and usage environments of the secondary battery user. For example, it may be determined that a risk of fire exists, or that a fire has occurred, in a lithiumion secondary battery at temperatures of 60°C or higher. In other cases, it may be determined that a risk of fire exists, or that a fire has occurred, at temperatures of 100°C or higher. Therefore, a specific temperature range may be defined as a risk temperature range in consideration of the operating temperature range of the secondary battery. A carbonate having a decomposition initiation temperature within the defined risk temperature range may be included, or alternatively, a carbonate having a decomposition initiation temperature outside the risk temperature range-either lower or higher than the risk temperature-may additionally be selected and formulated.

For example, as described in Table 3, if the user determines that the risk temperature range is 60°C or more, the carbonate may include 55 wt % ammonium carbonate, 20 wt % potassium bicarbonate, and 5 wt % magnesium carbonate. The carbonate may be formed by a combination thereof. In this way, ammonium carbonate, which accounts for the most wt %, is first decomposed at 60°C, which is a risk temperature, and the fire extinguishing process can proceed primarily. However, potassium bicarbonate, which accounts for the next most wt %, is decomposed and the fire extinguishing process may proceed secondary if the primary fire extinguishing process does not extinguish it and the temperature further increases to 100~120°C. Nevertheless, if the temperature increases further and the temperature rises to the decomposition initiation temperature of magnesium carbonate, the tertiary fire extinguishing process by magnesium carbonate may proceed. That is, when the temperature increases, the fire extinguishing process may proceed in stages.

If the carbonate is composed of only a material having a decomposition initiation temperature that is included in a risk temperature range, all materials are decomposed at the decomposition initiation temperature and a fire extinguishing process is performed. However, if complete fire extinguishing is not performed despite the fire extinguishing process, a rapid increase in fire temperature cannot be prevented, thereby failing to delay the occurrence of thermal runaway. This prevents the driver of the vehicle from providing time to evacuate from the vehicle.

However, as in the embodiment of the present invention, when two or more carbonates are formulated, and at least one of the carbonates-not included within the risk temperature range-has a decomposition initiation temperature equal to or lower than the lower limit of the risk temperature range, a stepwise fire suppression process may be achieved. As a result, a rapid rise in fire temperature may be prevented, and the onset of thermal runaway may be delayed. In addition, this has an effect of providing a time for the driver of the vehicle to evacuate.

Secondary batteries contain many types of organic compounds as anodes, cathodes and electrolytes. There is a problem in that thermal runaway, which is a characteristic phenomenon of secondary battery fire, occurs, that is, high-temperature flammable gas is ejected from a cell inside the secondary battery, and thermal runaway and flame are generated by electrical short-circuiting or ignition due to high temperature while being combined with oxygen inside and outside the pack, and toxic materials may be generated in this process.

Table 4 below is a main gas generated during thermal runaway of an exemplary secondary battery.

**Table 4**

| Flammable gas | Volume content (%) |
|---|---|
| Hydrogen | 30.6% |
| Carbon Dioxide | 29.9% |
| Carbon Monoxide | 21.3% |
| Methane | 7.2% |
| Ethylene | 5.6% |
| Propane or Propylene | 2.0% |
| Ethane | 1.8% |
| Other | 1.6% |

FIG. 2 is a graph for examining gas generated during thermal runaway and fire in a secondary battery including a secondary battery fire suppressant according to an embodiment of the present invention.

The fire suppressant may be included in various forms in the secondary battery, and FIG. 2 is a Fourier Transform Infrared Analysis (FRIT) experimental graph of hydrogen chloride and hydrogen fluoride gas generated during thermal runaway and fire in the secondary battery when a member impregnated with the secondary battery fire suppressant according to an embodiment of the present invention is attached ('CO ppm member' and 'C2H6 ppm member') and when not attached ('CO ppm' and 'C2H6 ppm').

As shown in FIG. 2, it can be confirmed that the secondary battery including the secondary battery fire suppressant 100 effectively suppresses carbon monoxide (CO) and acetylene (C2H6), which are combustible gases generated during a fire of the secondary battery, compared to the case where the secondary battery fire suppressant is not attached. As described above, the secondary battery fire suppressant 100 according to an embodiment of the present invention may effectively suppress or neutralize thermal runaway of the secondary battery and fire generated during fire.

This neutralization can be explained by adsorption and conversion reactions. That is, the secondary battery fire suppressant may be a combination of one (1) or two (2) or more of carbonic acid ions, chloride ions, hydroxide ions, and phosphate ions that cause adsorption and conversion reactions to fires occurring during thermal runaway of the secondary battery and one (1) or two (2) or more of monovalent, divalent, and trivalent cations.

The secondary battery fire suppressant according to an embodiment of the present invention may be provided in one (1) or two (2) or more of a paste phase, a liquid phase, and a gas phase. The secondary battery fire suppressant prepared in this way may be located in a separate partitioned area inside the secondary battery. In addition, the secondary battery fire suppressant may be positioned in the secondary battery in a state of being impregnated with a sheet or the like without being positioned in a separately partitioned area. In this case, the sheet impregnated with the secondary battery fire suppressant may be positioned on the inner surface as an outer surface, an inner surface, or an intermediate layer of the pouch forming each cell of the secondary battery, and may be included not only on the entire surface of the pouch but also on a part of the pouch surface.

In addition, the sheet impregnated with the secondary battery fire suppressant may be applied or attached to the inner surface of the battery pack case accommodating the secondary battery, or may be sprayed and included inside and outside the battery pack.

When the secondary battery fire suppressant is decomposed by heat due to the thermal runaway of the secondary battery according to an embodiment of the present invention, reactive decomposition gas and cationic metal ions may be generated and ejected.

The reactive decomposition gas ejected may detoxify the toxic gas ejected from the secondary battery. The reactive decomposition gas, which is provided by including one (1) or two (2) or more of carbonate, chloride, hydrate, or phosphate, wherein the secondary battery fire suppressant according to an embodiment of the present invention is decomposed by heat and is ejected, may be one (1) or two (2) or more of carbon dioxide (CO2), chlorine gas, hydroxide radical, and phosphate gas.

In addition, the cationic metal ions absorb radicals generated from electric sparks or flames to prevent combustion reactions from occurring in a chain, thereby suppressing the chain generation of fires.

The carbonate included in the secondary battery fire suppressant according to an embodiment of the present invention may be a secondary battery fire suppressant including at least one of sodium carbonate (Na2CO3), sodium bicarbonate (NaHCO3), potassium carbonate (K2CO3), potassium bicarbonate (KHCO3), ammonium carbonate ((NH4)2CO3), and ammonium bicarbonate (NH4HCO3).

The chloride that may be included in the secondary battery fire suppressant according to an embodiment of the present invention may be a fire suppressant including one (1) or two (2) or more of ammonium chloride (NH4Cl), potassium chloride (KCl), aluminum chloride (AlCl3), and sodium chloride (NaCl).

The hydroxide salt that may be included in the secondary battery fire suppressant according to an embodiment of the present invention may be a fire suppressant including one (1) or two (2) of sodium hydroxide (NaOH), potassium hydroxide (KOH), calcium hydroxide (Ca(OH)2), and magnesium hydroxide (Mg(OH)2).

The phosphate that may be included in the secondary battery fire suppressant according to an embodiment of the present invention may be a fire suppressant including one (1) or two (2) or more of ammonium phosphate ((NH4)3PO4), sodium phosphate (Na3PO4), and potassium phosphate (K3PO4).

Examples of the combination of carbonate materials among secondary battery fire suppressants may be performed as shown in Table 5.

**Table 5**

| Flammable gas | CO | C₂H₂₃ | CH₄ |
|---|---|---|---|
| Sodium carbonate | 55 wt% | 10 wt% | 10 wt% |
| Potassium bicarbonate | 20 wt% | 60 wt% | 10 wt% |
| Magnesium carbonate | 5 wt% | 10 wt% | 70 wt% |

Examples of the combination of chloride materials among secondary battery fire suppressants may be performed as shown in Table 6.

**Table 6**

| Flammable gas | CO | C₂H₂₃ | CH₄ |
|---|---|---|---|
| Ammonium chloride | 30 wt% | 20 wt% | 20 wt% |
| Potassium chloride | 20 wt% | 40 wt% | 30 wt% |
| aluminum chloride | 10 wt% | 10 wt% | 20 wt% |

Examples of the combination of hydroxide among secondary battery fire suppressants may be performed as shown in Table 7.

**Table 7**

| Flammable gas | CO | C₂H₂₃ | CH₄ |
|---|---|---|---|
| Sodium hydroxide | 40 wt% | 40 wt% | 30 wt% |
| Calcium hydroxide | 20 wt% | 20 wt% | 20 wt% |
| Magnesium hydroxide | 10 wt% | 10 wt% | 20 wt% |

Examples of the combination of phosphate materials among secondary battery fire suppressants may be performed as shown in Table 8.

**Table 8**

| Flammable ggas | CO | C₂H₂₃ | CH₄ |
|---|---|---|---|
| Ammonium phosphate | 20 wt% | 40 wt% | 30 wt% |
| Potassium phosphate | 20 wt% | 10 wt% | 20 wt% |
| Calcium phosphate | 10 wt% | 10 wt% | 10 wt% |
| Magnesium phosphate | 10 wt% | 10 wt% | 10 wt% |

Here, the carbonate included in the secondary battery fire suppressant according to an embodiment of the present invention may be selected in consideration of the flammable gas. The carbonate included in the secondary battery fire suppressant according to an embodiment of the present invention may be selected by a secondary battery producer or a user in consideration of the use environment (operating temperature, etc.) of the secondary battery or the type of gas determined to be a dangerous flammable gas.

That is, flammable gas determined as a gas that may cause a dangerous fire may be different in using the secondary battery depending on the use environment or the operation environment. For example, it may be determined that CO is a gas capable of causing a dangerous fire of the secondary battery. In this case, some of the carbonates may be appropriately selected according to the flammable gas that may cause a dangerous fire and used alone or in combination.

For example, when the flammbale gas that may cause a dangerous fire is carbon monoxide (CO), 55 wt % of sodium carbonate, 20 wt % of sodium bicarbonate, and 5 wt % of magnesium carbonate may be included. The carbonate may be formed by a combination thereof. In addition, it may include 30 wt % of ammonium chloride, 20 wt % of potassium chloride, and 10 wt % of aluminum chloride. The chloride salt may be formed by a combination thereof. In addition, 40 wt % of sodium hydroxide, 20 wt % of calcium hydroxide, and 10 wt % of magnesium hydroxide may be included. The hydroxyl salt may be formed by a combination thereof. In addition, 20 wt % of ammonium phosphate, 20 wt % of potassium phosphate, 10 wt % of calcium phosphate, and 10 wt % of magnesium phosphate may be included. The phosphate may be formed by a combination thereof. In addition, at least one of the carbonate, the chloride, the hydroxide, or the phosphate may be mixed.

Meanwhile, the organic binder 120 may be mixed with a carbonate 121.

The organic binder 120 may include at least one of an organic adhesive and an elastomer. Accordingly, the secondary battery fire suppressant 100 may have any form.

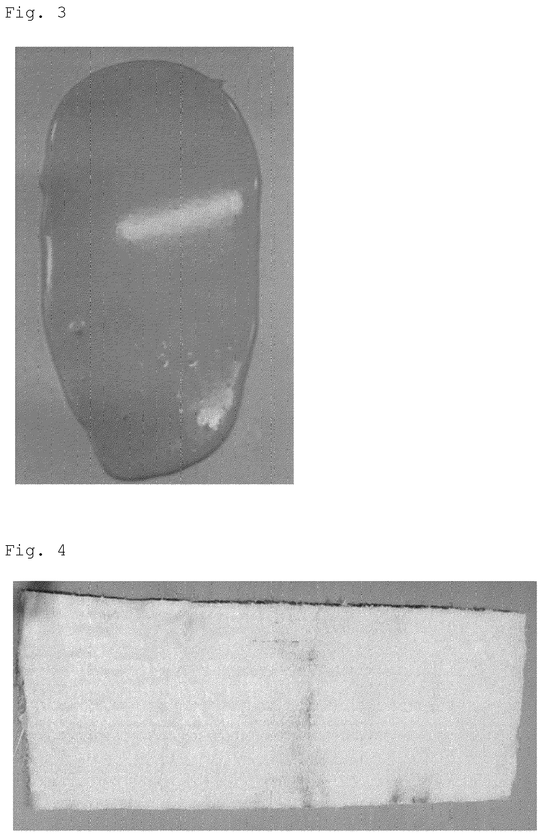

FIG. 3 is a photograph showing a paste state of the secondary battery fire suppressant according to an embodiment of the present invention.

As shown in FIG. 3, the secondary battery fire suppressant may be mixed with the organic binder 120 including at least one of an organic-based adhesive and rubber to be formed in a paste state.

As a specific example, the secondary battery fire suppressant of FIG. 3 is a mixture of 80 wt % of carbonate and 20 wt % of soft polyurethane as the organic binder 120.

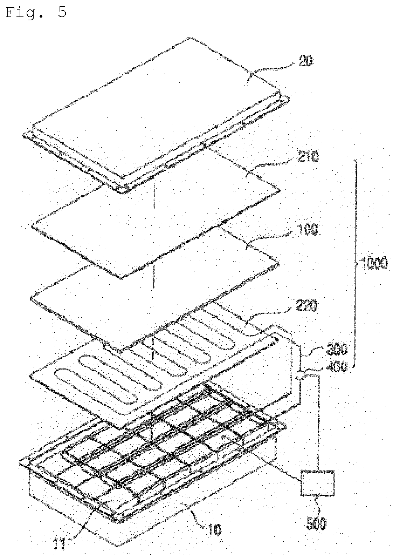

The paste-type secondary battery fire suppressant may be applied or coated on the inner surface of the case (corresponding to the battery pack cover 20 when referring to FIG. 5) accommodating the secondary battery.

When a fire occurs in the secondary battery and the temperature increases to reach a temperature range determined as a risk temperature, each carbonate may be sequentially decomposed according to the decomposition initiation temperature to emit carbon dioxide and cationic metal ions.

Through this, it is possible to block access of oxygen due to a suffocating effect of carbon dioxide on the flammable gas generated from the secondary battery. In addition, lithium, which may be a cause of ignition, may be converted into lithium carbonate to be non-flammable, and radicals generated by sparks may be absorbed thereby the spread of fire being suppressed.

The secondary battery fire suppressant may be provided in the form of a pad having elasticity.

When a plurality of secondary batteries are provided, the pad for a secondary battery fire suppressant according to an embodiment of the present invention provided in the form of a pad may be provided to be positioned between at least one of the plurality of secondary batteries.

When a fire occurs in the secondary battery and heat is generated to reach a temperature range determined as a risk temperature, each carbonate of the secondary battery fire suppressant pad may be sequentially decomposed according to the decomposition initiation temperature to emit carbon dioxide and cationic metal ions. Through this, it is possible to suppress or extinguish the spread of fire.

Meanwhile, if necessary, solid powder may be further included in the secondary battery fire suppressant 100.

FIG. 4 is a photograph showing a secondary battery fire suppression member according to an embodiment of the present invention, and FIG. 5 is an interlayer decomposition view of the secondary battery fire suppression member according to an embodiment of the present invention.

As shown in FIGS. 4 and 5, the secondary battery fire suppression member 1000 may include a pair of fiber members 210 and 220 and a secondary battery fire suppressant 100.

The pair of fiber members 210 and 220 may be non-combustible fiber members. In addition, the secondary battery fire suppressant 100 may be provided between the pair of fiber members 210 and 220.

In the present embodiment, the secondary battery fire suppression member 1000 may be formed by first applying the secondary battery fire suppressant 100 in a paste state onto any one fiber member 220, and then covering it with another fiber member 210. A coater may be used for coating of the paste-state secondary battery fire suppressant 100.

Alternatively, the secondary battery fire suppression member 1000 may be formed by first forming the secondary battery fire suppressant 100 in the form of a pad, and then attaching the pair of fiber members 210 and 220 to both surfaces of the secondary battery fire suppression pad formed in the form of a pad.

The secondary battery fire suppression member 1000 may be provided to cover at least a portion of the secondary battery. Referring to FIG. 4, the secondary battery fire suppression member 1000 may be provided to cover the battery pack 10 inside the battery pack cover 20.

Since the secondary battery fire suppression member 1000 may be formed to correspond to the shape of the battery pack 10, the entire battery pack 10 may be stably covered.

When a fire occurs in the secondary battery and the temperature increases to reach a temperature range determined as a risk temperature, the carbonate of the secondary battery fire suppression member 1000 may be sequentially decomposed according to the decomposition initiation temperature, and carbon dioxide and cationic metal ions may be ejected. Through this, the spread of the fire may be suppressed or extinguished.

As shown in FIG. 5, the secondary battery fire suppression member 1000 may include a pair of fiber members 210 and 220, a secondary battery fire suppressant 100, an electric heating wire 300, and a switch 400.

The pair of fiber members 210 and 220 and the secondary battery fire suppressant 100 may be the same as those described with reference to FIGS. 4 and 5.

The electric heating wire 300 may be disposed on any one fiber member 220 of the pair of fiber members 210 and 220. The electric heating wire 300 may be in direct contact with the secondary battery fire suppressant 100. In addition, the electric heating wire 300 may be connected to the secondary battery 11.

The switch 400 may be connected to the electric heating wire 3W. In an embodiment, the switch 400 may be connected to the electric heating wire 300 outside the fiber member 220.

When the sensed temperature exceeds the preset allowable temperature, the switch 400 may allow a current of the secondary battery 11 to be applied to the electric heating wire 300 disposed on the fiber member 220, and the electric heating wire 300 may be heated. The electric heating wire 300 may be joule-heated. Here, the allowable temperature may be a risk temperature required by the user.

Accordingly, when a fire occurs and the temperature exceeds a risk temperature, the current of the secondary battery 11 may be applied to the electric heating wire 300 to heat the electric heating wire 300. In addition, the carbonate may be decomposed by the heat of the electric heating wire 300.

In this case, the electric heating wire 300 may be heated to correspond to the lowest decomposition initiation temperature among the powders included in the fire extinguishing material, and through this, the powder having the lowest decomposition initiation temperature may be primarily decomposed. If the fire is not extinguished by the primary fire extinguishing process, the temperature will rise, and the secondary and tertiary fire extinguishing processes may proceed thereafter.

The switch 400 may be formed such that an allowable temperature may be set according to a risk temperature required by a user. Accordingly, the fire extinguishing process initiation temperature of the secondary battery fire suppression member 1000 may be easily and accurately set according to the risk temperature variously required for each user.

For example, the switch 400 may be configured to include a bimetal in which a switching operation may be automatically implemented according to a temperature.

In addition, the secondary battery fire suppression member 1000 may further include a temperature sensor unit 500 for detecting a temperature. In this case, the switch 400 may be configured to perform a switching operation based on the temperature detected by the temperature sensor unit 500.

Meanwhile, the secondary battery fire suppression member 1000 is not limited to the temperature as a sensing target, but may also detect another sensing target. For example, the secondary battery fire suppression member 1000 may detect pressure as a sensing target.

When the pressure is a sensing target, the secondary battery fire suppression member 1000 may further include a pressure sensor unit (not shown).

The pressure sensor unit may detect the internal pressure of the secondary battery 11.

When a fire occurs and the internal pressure of the secondary battery 11 increases, and the detected pressure exceeds a preset allowable pressure, the switch 400 may allow a current of the secondary battery 11 to be applied to the electric heating wire 300 disposed on the fiber member 220, and the electric heating wire 300 may be heated.

The description of the present invention is for illustrative purposes, and those of ordinary skill in the art to which the present invention belongs can understand that the present invention can be easily modified into other specific forms without changing the technical spirit or essential features of the present invention. Therefore, it should be understood that the embodiments described above are exemplary in all aspects and are not limited. For example, each component described as a single type may be distributed and implemented, and similarly, components described as being distributed may be implemented in a combined form.

The scope of the present invention is indicated by the claims to be described later, and it should be interpreted that all changes or modified forms derived from the meaning and scope of the claims and the equivalent concept thereof are included in the scope of the present invention.

### [List of reference signs]

10: battery pack
11: secondary battery
20: battery pack cover
100: secondary battery fire suppressant
110: fire extinguishing material
120: organic binder
210, 220: fiber member
300: electric heating wire
400: switch
500: temperature sensor unit
1000: secondary battery fire suppression member

## Claims

1. A fire suppressant comprising:
at least one first material having a decomposition initiation temperature; and a second material mixed with the first material to bind the first material,
wherein the first material is decomposed when the decomposition initiation temperature is reached to render a combustible organic compound non-combustible.

2. The fire suppressant according to claim 1,
wherein the first material is a fire extinguishing material, and
the second material is an organic binder.

3. The fire suppressant according to claim 2,
wherein the fire extinguishing material comprises two or more fire extinguishing materials,
wherein the two or more fire extinguishing materials have two or more decomposition initiation temperatures, and are capable of being decomposed stepwise to render a combustible organic compound non-combustible.

4. The fire suppressant of claim 1,
wherein the first material comprises at least one of carbonate, chloride, hydroxide, and phosphate, and is configured to render a combustible organic compound non-combustible.

5. The fire suppressant according to claim 4,
wherein the carbonate comprises at least one of sodium carbonate (Na2CO3), sodium bicarbonate (NaHCO3), potassium carbonate (K2CO3), potassium bicarbonate (KHCO3), ammonium carbonate ((NH4)2CO3), and ammonium bicarbonate (NH4HCO3), and is configured to render a combustible organic compound non-combustible.

6. The fire suppressant according to claim 4,
wherein the chloride comprises at least one of ammonium chloride (NH4Cl), potassium chloride (KCl), aluminum chloride (AlCl3), and sodium chloride (NaCl), and is configured to render a combustible organic compound non-combustible.

7. The fire suppressant according to claim 4,
wherein the hydroxide comprises at least one of sodium hydroxide (NaOH), potassium hydroxide (KOH), calcium hydroxide (Ca(OH)2), and magnesium hydroxide (Mg(OH)2), and is configured to render a combustible organic compound non-combustible.

8. The fire suppressant according to claim 4,
wherein the phosphate comprises at least one of ammonium phosphate ((NH4)3PO4), sodium phosphate (Na3PO4), and potassium phosphate (K3PO4), and is configured to render a combustible organic compound non-combustible.

9. The fire suppressant according to claim 2,
wherein the fire suppressant is provided in one or more phases of a paste phase, a liquid phase, and a gas phase.

10. The fire suppressant according to claim 1,
wherein the second material comprises at least one of an organic adhesive and an elastomer, and is configured to render a combustible organic compound non-combustible.

11. A fire suppression member comprising:
a pair of fiber members;
one or more fire extinguishing materials provided between the pair of fiber members, configured to have a decomposition initiation temperature and configured to be decomposed to render a combustible organic compound non-combustible when the decomposition initiation temperature is reached; and
a fire suppressant including an organic binder mixed with the fire extinguishing material,
wherein the fire suppression member is configured to render a combustible organic compound non-combustible.

12. A secondary battery comprising:
one or more fire extinguishing materials having a decomposition initiation temperature; and
an organic binder mixed with one or more fire extinguishing materials;
wherein one or more fire extinguishing materials configured to render a combustible organic compound non-combustible when the fire extinguishing material is decomposed upon reaching the decomposition initiation temperature.
